# EUROPEAN PATENT APPLICATION

(11) **EP 3 187 380 A1**
(43) Date of publication of application: **05.07.2017**
(21) Application number: 15835435.7
(22) Date of filing: 20.08.2015
(51) Int. Cl.: B60R 21/264

(54) **GAS GENERATOR**

(30) Priority: 27.08.2014 JP 2014172555
(71) Applicant: Nippon Kayaku Kabushiki Kaisha, Tokyo 100-0005 (JP)
(72) Inventor: KUBO, Dairi, Himeji-shi Hyogo 679-2123 (JP); HAGIHARA, Daisuke, Himeji-shi Hyogo 679-2123 (JP)
(74) Representative: TBK
(86) International application number: PCT/JP2015/073304
(87) International publication number: WO 2016/031656

(57) **Abstract**

A gas generator (1A) includes a partition portion (32), a cylindrical portion (41), and a separation wall portion (51) which divide a space in a housing into a first combustion chamber (S1A), a second combustion chamber (S1B), a gas passage chamber (S2), and a gas emission chamber (S3). The first combustion chamber (S1A) includes a space inside the cylindrical portion (41) on a side of an igniter (22) relative to the separation wall portion (51), and the second combustion chamber (S1B) includes the space inside the cylindrical portion (41) on a side of the partition portion (32) relative to the separation wall portion (51). The gas passage chamber (S2) includes a space outside the cylindrical portion (41) which faces a circumferential wall portion (11) of the housing, and the gas emission chamber (S3) includes a space on a side of a gas discharge opening (13) relative to the partition portion (32). At least some of a gas generated in the first combustion chamber (S1A) at the time of activation of the gas generator (1A) is emitted to the outside sequentially through the gas passage chamber (S2), the second combustion chamber (S1B), and the gas emission chamber (S3).

## Description

### TECHNICAL FIELD

The present invention relates to a gas generator incorporated in an air bag apparatus as a passenger protection apparatus equipped in a car and the like, and particularly to a gas generator having an elongated columnar outer geometry.

### BACKGROUND ART

From a point of view of protection of a driver and/or a passenger in a car, an air bag apparatus which is a passenger protection apparatus has conventionally widely been used. The air bag apparatus is equipped for the purpose of protecting a driver and/or a passenger against shock caused at the time of collision of a vehicle, and it receives a body of a driver or a passenger with a developed air bag by instantaneously expanding and developing the air bag at the time of collision of a vehicle. A gas generator is equipment which is incorporated in an air bag apparatus and expands and develops an air bag by instantaneously generating a gas at the time of collision of a vehicle.

Depending on a position of installation in a vehicle and the like or on specifications such as output, gas generators of various constructions are available. A gas generator called a cylinder type gas generator represents one example. The cylinder type gas generator has an outer geometry in an elongated columnar shape and it is suitably incorporated in a side air bag apparatus, an air bag apparatus on a passenger's seat side, a curtain air bag apparatus, a knee air bag apparatus, or a seat cushion air bag apparatus.

Normally, in a cylinder type gas generator, an igniter is installed at one end portion in an axial direction of a housing, a combustion chamber accommodating a gas generating agent is provided in a central portion in the axial direction of the housing, a filter chamber accommodating a filter is provided at the other end portion in the axial direction of the housing, and a gas discharge opening is provided in a circumferential wall portion of the housing in a portion defining the filter chamber. In the cylinder type gas generator thus constructed, in general, a gas generated in the combustion chamber flows into the filter chamber and passes through the filter, and the gas which has passed through the filter is discharged to the outside through the gas discharge opening. In addition to the cylinder type gas generator, what is called a T-shaped gas generator is available as a gas generator having an elongated columnar outer geometry.

A cylinder type gas generator disclosed in Japanese Patent Laying-Open No. 11-245760 (PTD 1) represents a cylinder type gas generator which can improve efficiency in cooling of a gas generated in a combustion chamber. The cylinder type gas generator disclosed in the publication has a flow path constructed such that the gas generated in the combustion chamber once impinges on a circumferential wall portion of a housing before it flows into a filter chamber.

Specifically, in the cylinder type gas generator disclosed in the publication, a partition member axially dividing a space in an elongated, substantially cylindrical housing is provided in a housing, a screen in a form of a mesh is placed coaxially with the housing in a space on a side of an igniter relative to the partition member, and a filter is placed in the space opposite to a side where the igniter is located when viewed from the partition member. A gas generating agent is accommodated in a portion of the space in the screen located on the side of the igniter and a cup-shaped member is placed in a portion of the space in the screen located on a side of the filter.

With the construction as above, a gas at a high temperature generated as a result of burning of the gas generating agent once moves radially outward in the housing. Then, the gas passes through the screen, impinges on the inner circumferential surface of the housing, thereafter flows into the cup-shaped member through a communication hole provided in the cup-shaped member, and thereafter flows into the filter through a communication hole provided in the partition member. Therefore, the gas at a high temperature generated in the combustion chamber is cooled outside the screen by the housing relatively low in temperature, and hence efficiency in cooling of the gas is improved.

### CITATION LIST

### PATENT DOCUMENT

PTD 1: Japanese Patent Laying-Open No. 11-245760

### SUMMARY OF INVENTION

### TECHNICAL PROBLEM

In the gas generator disclosed in the publication, however, a cup-shaped member is placed only for providing a space for passage of a gas between the combustion chamber and the filter chamber such that the gas which impinges on the inner circumferential surface of the housing is thereafter introduced into the filter chamber. Therefore, the gas generator increases in size along the axial direction due to placement of the cup-shaped member and the gas generator disadvantageously increases in size as a whole.

Therefore, the present invention was made to solve the above-described problems, and an object thereof is to provide a gas generator small in size which can efficiently cool a gas at a high temperature generated as a result of burning of a gas generating agent.

### SOLUTION TO PROBLEM

A gas generator based on the present invention includes a housing, an igniter, a partition member, a division member, and a separation wall member. The housing is formed from an elongated cylindrical member containing a first combustion chamber and a second combustion chamber in which a gas generating agent is arranged, a gas emission chamber emitting a gas generated in the first combustion chamber and the second combustion chamber to the outside, and a gas passage chamber connecting the first combustion chamber and the second combustion chamber to each other, and having axial one and the other end portions closed. The igniter is assembled to the one end portion of the housing as facing the first combustion chamber. The partition member, the division member, and the separation wall member are located in the housing and divide a space in the housing into the first combustion chamber, the second combustion chamber, the gas emission chamber, and the gas passage chamber. The partition member has a partition portion axially dividing the space in the housing. The division member has a cylindrical portion radially dividing the space in the housing by being arranged on a side of the one end portion of the housing relative to the partition portion such that an axial direction of the cylindrical portion is substantially in parallel to an axial direction of the housing. The separation wall member has a separation wall portion axially dividing a space in the cylindrical portion by being arranged in the cylindrical portion. The first combustion chamber includes at least a part of the space inside the cylindrical portion on the side of the one end portion of the housing relative to the separation wall portion. The second combustion chamber includes at least a part of the space inside the cylindrical portion on a side of the other end portion of the housing relative to the separation wall portion. The gas passage chamber includes a space outside the cylindrical portion which faces a circumferential wall portion of the housing. The gas emission chamber includes a space on the side of the other end portion of the housing relative to the partition portion. A first communication hole for communication between the first combustion chamber and the gas passage chamber is provided in a portion of the cylindrical portion for division into the first combustion chamber and the gas passage chamber. A second communication hole for communication between the gas passage chamber and the second combustion chamber is provided in a portion of the cylindrical portion for division into the gas passage chamber and the second combustion chamber. A gas discharge opening for discharge of a gas to the outside of the housing is provided in a portion of the housing defining the gas emission chamber. At least some of the gas generated in the first combustion chamber is emitted to the outside sequentially through the gas passage chamber, the second combustion chamber, and the gas emission chamber when the gas generator is activated.

In the gas generator based on the present invention, the first combustion chamber and the second combustion chamber may completely be separated from each other by the separation wall portion so as not to communicate with each other in the cylindrical portion.

In the gas generator based on the present invention, the first combustion chamber and the second combustion chamber may communicate with each other in a part of the inside of the cylindrical portion.

In the gas generator based on the present invention, the separation wall member is preferably press-fitted or loosely fitted into the cylindrical portion.

In the gas generator based on the present invention, the cylindrical portion may be provided with a stop portion which restricts movement of the separation wall member toward the other end portion of the housing at the time of activation.

In the gas generator based on the present invention, the gas generating agent arranged in the first combustion chamber and the gas generating agent arranged in the second combustion chamber may be identical to each other in shape, size, and composition.

In the gas generator based on the present invention, the gas generating agent arranged in the first combustion chamber and the gas generating agent arranged in the second combustion chamber may be different from each other in at least any of shape, size, and composition.

In the gas generator based on the present invention, an axial end portion of the cylindrical portion located on the side of the other end portion of the housing preferably abuts on the partition portion.

In the gas generator based on the present invention, the division member may further include an annular portion erected radially outward from an axial end portion of the cylindrical portion located on the side of the other end portion of the housing.

In the gas generator based on the present invention, the division member may be fixed to the housing as the annular portion is press-fitted into the housing.

The gas generator based on the present invention may further include a cup-shaped member accommodating the gas generating agent arranged in the first combustion chamber, the gas generating agent arranged in the second combustion chamber, and the separation wall member and at least partially inserted in the cylindrical portion. In that case, the partition portion is preferably formed by a top wall portion of the cup-shaped member located on the side of the other end portion of the housing.

The gas generator based on the present invention may further include a cup-shaped member accommodating the gas generating agent arranged in the first combustion chamber and at least partially inserted in the cylindrical portion. In that case, the separation wall portion is preferably formed by a top wall portion of the cup-shaped member located on the side of the other end portion of the housing.

The gas generator based on the present invention may further include a cup-shaped member accommodating the gas generating agent arranged in the first combustion chamber, the gas generating agent arranged in the second combustion chamber, the division member, and the separation wall member and inserted in the housing. In that case, the partition portion is preferably formed by a top wall portion of the cup-shaped member located on the side of the other end portion of the housing.

The gas generator based on the present invention may include a filter arranged in the gas emission chamber through which the gas generated in the first combustion chamber and the second combustion chamber passes.

In the gas generator based on the present invention, the filter may be formed from a member having a hollow portion extending along the axial direction of the housing and reaching an axial end surface located on a side of the partition portion. In that case, the partition portion preferably includes a first region which is located to be opposed to the hollow portion and opens as a result of burning of the gas generating agent and a second region which is annularly located to surround the first region so as to be opposed to a portion of the axial end surface of the filter except for the hollow portion and does not open even when the gas generating agent burns.

### ADVANTAGEOUS EFFECTS OF INVENTION

According to the present invention, a gas generator small in size which can efficiently cool a gas at a high temperature generated as a result of burning of a gas generating agent can be obtained.

### BRIEF DESCRIPTION OF DRAWINGS

Fig. 1 is a schematic diagram of a cylinder type gas generator in a first embodiment of the present invention.
Fig. 2 is an enlarged cross-sectional view of a portion in the vicinity of an igniter of the cylinder type gas generator shown in Fig. 1.
Fig. 3 is an enlarged cross-sectional view of a portion in the vicinity of a filter of the cylinder type gas generator shown in Fig. 1.
Fig. 4 is a cross-sectional view along the line IV-IV shown in Fig. 3.
Fig. 5 is a cross-sectional view along the line V-V shown in Fig. 3.
Fig. 6 is a diagram schematically showing a flow of a gas at the time of activation of the cylinder type gas generator shown in Fig. 1.
Fig. 7 is an enlarged cross-sectional view of a portion in the vicinity of a separation wall portion of a cylinder type gas generator according to a first modification.
Fig. 8 is an enlarged cross-sectional view of a portion in the vicinity of the separation wall portion of a cylinder type gas generator according to a second modification.
Fig. 9 is an enlarged cross-sectional view of a portion in the vicinity of the separation wall portion of a cylinder type gas generator according to a third modification.
Fig. 10 is an enlarged cross-sectional view of a portion in the vicinity of the separation wall portion of a cylinder type gas generator according to a fourth modification.
Fig. 11 is a schematic diagram of a cylinder type gas generator in a second embodiment of the present invention.
Fig. 12 is a schematic diagram of a cylinder type gas generator in a third embodiment of the present invention.
Fig. 13 is a schematic diagram of a cylinder type gas generator in a fourth embodiment of the present invention.
Fig. 14 is a schematic diagram of a cylinder type gas generator in a fifth embodiment of the present invention.
Fig. 15 is an enlarged cross-sectional view of a portion in the vicinity of an igniter of the cylinder type gas generator shown in Fig. 14.
Fig. 16 is an enlarged cross-sectional view of a portion in the vicinity of a filter of the cylinder type gas generator shown in Fig. 14.
Fig. 17 is a cross-sectional view along the line XVII-XVII shown in Fig. 16.
Fig. 18 is a cross-sectional view along the line XVIII-XVIII shown in Fig. 16.
Fig. 19 is a schematic diagram of a cylinder type gas generator in a sixth embodiment of the present invention.

### DESCRIPTION OF EMBODIMENTS

An embodiment of the present invention will be described hereinafter in detail with reference to the drawings. An embodiment shown below represents application of the present invention to a cylinder type gas generator incorporated in a side air bag apparatus. The same or common elements in embodiments shown below have the same reference characters allotted in the drawings and description thereof will not be repeated.

### (First Embodiment)

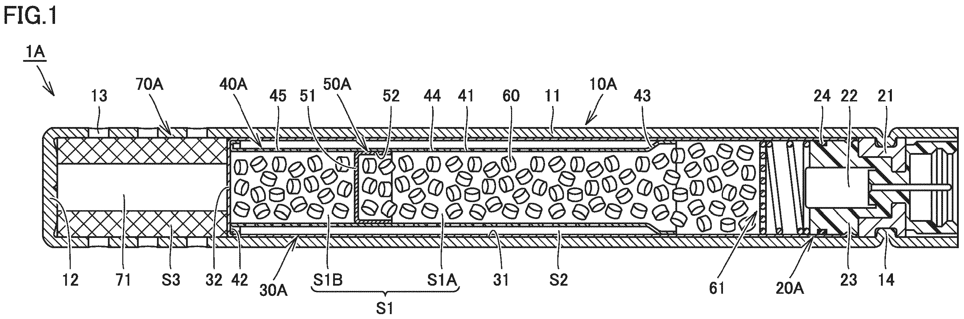

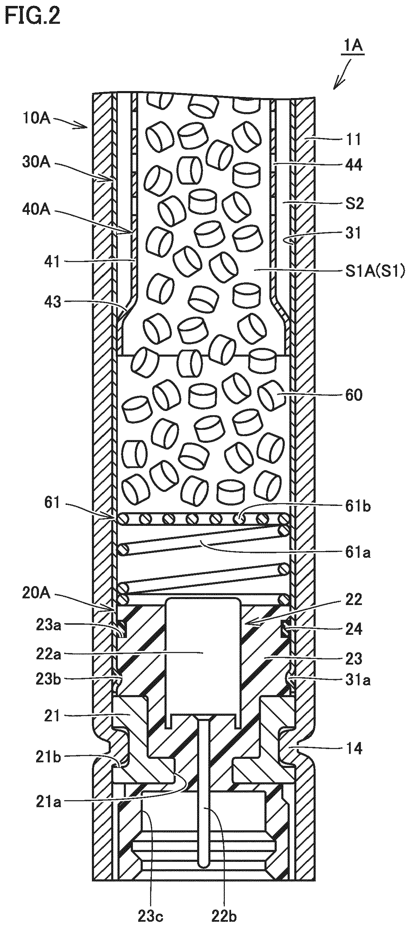

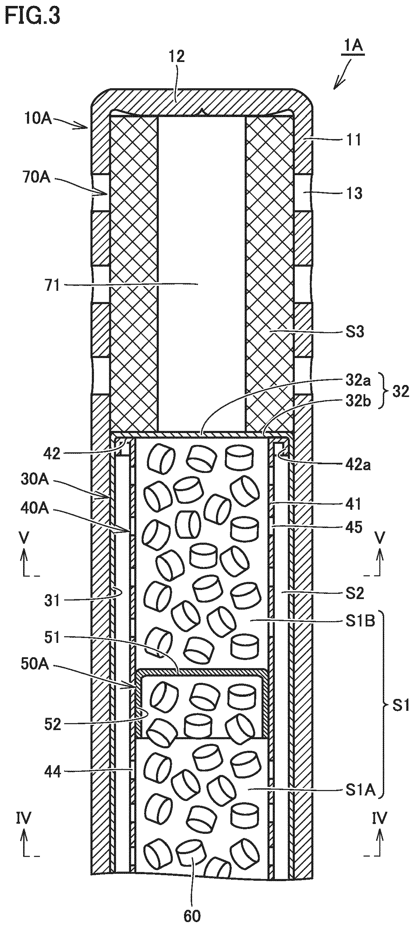

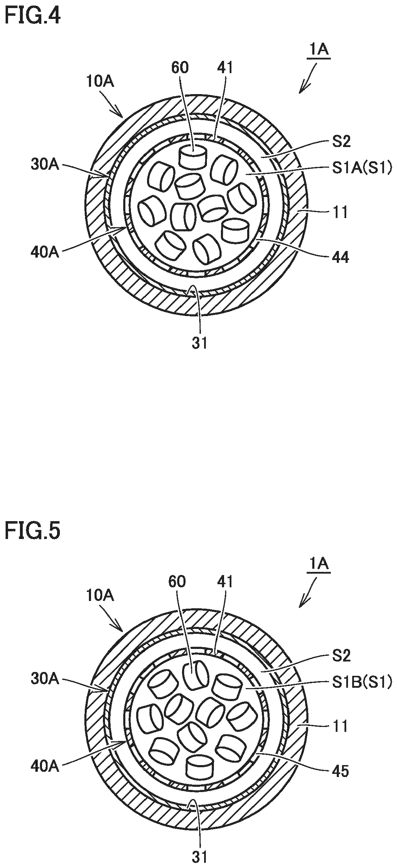

Fig. 1 is a schematic diagram of a cylinder type gas generator in a first embodiment of the present invention. Figs. 2 and 3 are an enlarged cross-sectional view of a portion in the vicinity of an igniter and an enlarged cross-sectional view of a portion in the vicinity of a filter, of the cylinder type gas generator shown in Fig. 1, respectively. Figs. 4 and 5 are cross-sectional views along the lines IV-IV and V-V shown in Fig. 3, respectively. A construction of a cylinder type gas generator 1A in the present embodiment will initially be described with reference to Figs. 1 to 5.

As shown in Figs. 1 to 3, cylinder type gas generator 1A in the present embodiment has an elongated columnar outer geometry and has a housing having closed one and the other end portions located in an axial direction. The housing is constituted of a cylindrical housing main body 10A with bottom having one axial side closed and having a circumferential wall portion 11 and a closing portion 12 and an igniter assembly 20A including a cylindrical collar 21 having a through portion 21a extending along a direction the same as the axial direction of housing main body 10A. Collar 21 has an annular groove portion 21b for fixing by fastening which will be described later at a prescribed position in an outer circumferential surface thereof, and annular groove portion 21b is provided to extend along a circumferential direction in the outer circumferential surface of collar 21.

Igniter assembly 20A is fixed to housing main body 10A so as to close an opening end of housing main body 10A. Specifically, with igniter assembly 20A being inserted in the opening end of housing main body 10A, circumferential wall portion 11 of housing main body 10A in a portion corresponding to annular groove portion 21b provided in the outer circumferential surface of collar 21 of igniter assembly 20A is decreased in diameter radially inward and engaged with annular groove portion 21b so that igniter assembly 20A is fixed by fastening to housing main body 10A. One axial end portion of the housing is thus formed by igniter assembly 20A and the other axial end portion of the housing is formed by closing portion 12 of housing main body 10A.

Such fixing by fastening is called omnidirectional fastening in which circumferential wall portion 11 of housing main body 10A is substantially uniformly decreased in diameter radially inward. With such omnidirectional fastening, a fastening portion 14 is provided in circumferential wall portion 11 of housing main body 10A and fastening portion 14 is in intimate contact with respective annular groove portion 21b. Thus, a gap is prevented from being provided between housing main body 10A and igniter assembly 20A.

Housing main body 10A may be formed from a member made of a metal such as stainless steel, iron steel, an aluminum alloy, or a stainless alloy, from a press-formed product made of a metal and resulting from forming in a cylindrical shape with bottom by press-working of a rolled steel plate represented by SPCE, or from a formed product made of a metal and resulting from forming in a cylindrical shape with bottom by closing one of axial end portions of an electric resistance welded tube represented by STKM In particular, when housing main body 10A is formed from a press-formed product of a rolled steel plate or a formed product of an electric resistance welded tube, housing main body 10A can be formed more inexpensively and readily and with much lighter weight than when the housing main body is formed from a member made of a metal such as stainless steel or iron steel. Collar 21 of igniter assembly 20A is formed from a member made of a metal such as stainless steel, iron steel, an aluminum alloy, or a stainless alloy.

As shown in Figs. 1 and 2, igniter assembly 20A includes an igniter 22, a holding portion 23 formed from a resin molded portion, and a sealing member 24 in addition to collar 21 described above. Igniter 22 is arranged in through portion 21a in collar 21 and holding portion 23 is located to bury a space between collar 21 and igniter 22.

Igniter 22 serves to burn a gas generating agent 60 which will be described later and is assembled to above-described one axial end portion of the housing as being supported by collar 21 with holding portion 23 being interposed. More specifically, as shown in Fig. 2, igniter 22 includes an ignition portion 22a and a pair of terminal pins 22b. In ignition portion 22a, a resistor (bridge wire) is attached to be connected to the pair of terminal pins 22b, an ignition agent is loaded in ignition portion 22 so as to surround the resistor or to be in contact with the resistor, and an enhancer agent is also loaded as necessary.

Here, a Nichrome wire or a resistance wire made of an alloy containing platinum and tungsten is generally used as a resistor, and ZPP (zirconium potassium perchlorate), ZWPP (zirconium tungsten potassium perchlorate), lead tricinate, or the like is generally made use of as the ignition agent. A composition composed of metal powders/oxidizing agent represented by B/KNO₃, B/NaNO₃, or Sr(NO₃)₂, a composition composed of titanium hydride/potassium perchlorate, or a composition composed of B/5-aminotetrazole/potassium nitrate/molybdenum trioxide is employed as the enhancer agent. A squib cup surrounding ignition portion 22a is generally made of a metal or a plastic.

Upon sensing collision, a prescribed amount of current flows in a resistor through terminal pin 22b. As the prescribed amount of current flows in the resistor, Joule heat is generated in the resistor and the ignition agent starts burning. Flame at a high temperature caused by burning bursts the squib cup accommodating the ignition agent. A time period from flow of a current in the resistor until activation of igniter 22 is generally not longer than 2 milliseconds in a case that the Nichrome wire is employed as the resistor.

Holding portion 23 is formed by injection molding (more particularly, insert molding) with the use of a mold, and formed by attaching an insulating fluid resin material to collar 21 and igniter 22 and solidifying the resin material. Igniter 22 is arranged to be inserted into through portion 21a in collar 21 in molding of holding portion 23 and fixed to collar 21 with holding portion 23 being interposed, as a result of feed of the fluid resin material described above so as to fill a space between collar 21 and igniter 22 in this state.

For a source material for holding portion 23 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of. In a case where these thermoplastic resins are selected as a source material, in order to ensure mechanical strength of holding portion 23 after molding, glass fibers or the like are preferably contained as fillers in these resin materials. In a case where sufficient mechanical strength can be ensured only by a thermoplastic resin, however, a filler as described above does not have to be added.

Holding portion 23 is not only formed in through portion 21a in collar 21 but also formed along the axial direction of through portion 21a as projecting outward. A pair of annular groove portions 23a and 23b is provided in an outer circumferential surface of holding portion 23 in a portion of the holding portion projecting toward a portion where ignition portion 22a of igniter 22 is located, and a recess portion 23c is provided in an axial end portion of holding portion 23 in a portion of the holding portion projecting toward a portion where terminal pin 22b of igniter 22 is located.

Sealing member 24 formed from an O ring is accommodated in annular groove portion 23a, and a cup-shaped member 30A which will be described later is fixed by fastening to annular groove portion 23b. Recess portion 23c provides a female connector portion which receives a male connector (not shown) of a harness for connecting igniter 22 and a control unit (not shown) to each other, and a portion close to a tip end of terminal pin 22b of igniter 22 is located as being exposed in recess portion 23c. A male connector is inserted in recess portion 23c serving as the female connector portion so that electrical conduction between a core of the harness and terminal pin 22b is achieved.

As shown in Figs. 1 to 5, cup-shaped member 30A is inserted in the housing from a side of above-described one end portion of the housing to which igniter assembly 20A is assembled. Cup-shaped member 30A is formed from a substantially cylindrical member with bottom having a sidewall portion 31 and a top wall portion 32 and has an opening end into which igniter assembly 20A described above is inserted.

More specifically, a portion corresponding to annular groove portion 23b provided in holding portion 23, of sidewall portion 31 in a portion located close to the opening end of cup-shaped member 30A is decreased in diameter radially inward and engaged with annular groove portion 23b so that a fixing portion 31a is provided in sidewall portion 31 of cup-shaped member 30A and cup-shaped member 30A is fixed by fastening to igniter assembly 20A. Sealing member 24 accommodated in annular groove portion 23a provided in holding portion 23 described above thus lies between sidewall portion 31 and holding portion 23 in the portion located close to the opening end of cup-shaped member 30A, so that hermeticity in that portion is ensured.

Cup-shaped member 30A does not have any opening in sidewall portion 31 and top wall portion 32, and a space therein is completely hermetically sealed while cup-shaped member 30A is fixed to igniter assembly 20A. A part of cup-shaped member 30A bursts or melts as a result of increase in pressure or conduction of generated heat at the time when igniter 22 is activated and gas generating agent 60 burns. A metal member formed by press-forming of a thin metal plate (foil) made of copper, aluminum, a copper alloy, an aluminum alloy, or the like, or a resin member formed by injection molding or sheet forming can be employed as a material for cup-shaped member 30A.

Cup-shaped member 30A is inserted into the housing so as to reach a position intermediate in the axial direction of the housing, so that top wall portion 32 is located at a prescribed distance from above-described the other end portion of the housing. Cup-shaped member 30A also functions as a partition member dividing a space in the housing and top wall portion 32 functions as a partition portion which axially divides the space in the housing.

As shown in Figs. 1 to 5, cup-shaped member 30A accommodates a division member 40A, a separation wall member 50A, gas generating agent 60, and a cushion member 61.

Division member 40A is arranged on a side of above-described one end portion of the housing relative to top wall portion 32 of cup-shaped member 30A functioning as the partition portion described above, and more specifically, accommodated in a space located on a side of top wall portion 32 in the space in cup-shaped member 30A.

Division member 40A has a cylindrical portion 41 arranged such that an axial direction thereof extends substantially in parallel to the axial direction of circumferential wall portion 11 of the housing, an annular portion 42 in a form of a flange erected radially outward from an axial end portion of cylindrical portion 41 located on the side of above-described the other end portion of the housing, and a skirt portion 43 formed to spread toward a radially outer side of cylindrical portion 41 from the side of above-described one end portion of the housing. Annular portion 42 includes at an outer circumferential edge portion thereof, a cylindrical folded back portion 42a folded back toward skirt portion 43.

Annular portion 42 is arranged such that an axial end portion thereof located on the side of the other end portion of the housing abuts on an inner surface of top wall portion 32 of cup-shaped member 30A. Cylindrical folded back portion 42a is arranged such that an outer circumferential surface thereof abuts on the inner circumferential surface of sidewall portion 31 of cup-shaped member 30A. Skirt portion 43 is arranged to abut on the inner circumferential surface of sidewall portion 31 of cup-shaped member 30A. Thus, division member 40A is arranged at a prescribed distance from each of above-described one end portion and the other end portion of the housing in the axial direction of the housing.

Division member 40A also functions as a member dividing the space in the housing, and cylindrical portion 41 thereof functions as a site radially dividing the space in the housing and annular portion 42 and skirt portion 43 function as sites axially dividing the space in the housing in an outer circumferential portion of the space.

Division member 40A is formed from a member sufficiently high in mechanical strength so as not to burst with increase in pressure even when gas generating agent 60 burns. For example, division member 40A is formed from a member formed by press-working a plate-shaped member made of metal, and suitably a member formed from a steel plate of common steel, special steel, or the like (such as a cold rolled steel plate or a stainless steel plate).

In the space in cup-shaped member 30A divided by division member 40A described above, gas generating agent 60 is loaded in a portion including a space located on the side of top wall portion 32 in the inside of cylindrical portion 41 of division member 40A, and cushion member 61 is arranged in a space on a side where igniter assembly 20A is located as being interposed between igniter assembly 20A and gas generating agent 60.

Gas generating agent 60 is an agent which is ignited by thermal particles generated as a result of activation of igniter 22 and produces a gas as it burns. A non-azide-based gas generating agent is preferably employed as gas generating agent 60, and gas generating agent 60 is formed as a molding generally containing a fuel, an oxidizing agent, and an additive. For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of. In addition, as the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of. Moreover, as the additive, a binder, a slag formation agent, a combustion modifier, or the like is exemplified. As the binder, for example, metal salt of carboxymethyl cellulose, an organic binder such as stearate, or an inorganic binder such as synthetic hydrotalcite and Japanese acid clay can suitably be made use of. As the slag formation agent, silicon nitride, silica, Japanese acid clay, or the like can suitably be made use of. In addition, as the combustion modifier, a metal oxide, ferrosilicon, activated carbon, graphite, or the like can suitably be made use of.

A shape of a molding of gas generating agent 60 includes various shapes such as a particulate shape including a granule, a pellet, and a column, and a disc shape. In addition, among columnar moldings, a molding with holes having through holes in the molding (such as a cylindrical shape with a single hole or a cylindrical shape with multiple holes) is also made use of. These shapes are preferably selected as appropriate depending on specifications of an air bag apparatus in which cylinder type gas generator 1A is incorporated, and for example, a shape optimal for the specifications is preferably selected by selecting a shape allowing change over time of a rate of generation of a gas during burning of gas generating agent 60. Furthermore, in addition to a shape of gas generating agent 60, a size of a molding or an amount thereof for filling is preferably selected as appropriate, in consideration of a linear burning velocity, a pressure exponent, or the like of gas generating agent 60.

Cushion member 61 is provided for the purpose of preventing gas generating agent 60 made of a molding from being crushed by vibration or the like, and has a spring portion 61a formed by bending a metal wire rod and a pressing portion 61b. Spring portion 61a is arranged such that one end thereof abuts on holding portion 23 of igniter assembly 20A and pressing portion 61b is formed at the other end. Pressing portion 61b is provided by arranging metal wire rods substantially in parallel to each other at a prescribed interval, and abuts on gas generating agent 60. Thus, gas generating agent 60 is biased toward top wall portion 32 of cup-shaped member 30A by cushion member 61 and prevented from moving in cup-shaped member 30A. Instead of cushion member 61 as described above, a cushion material made, for example, of a molding of ceramic fibers, rock wool, a foamed resin (such as foamed silicone, foamed polypropylene, or foamed polyethylene), or rubber represented by chloroprene and EPDM may be made use of.

Cylindrical separation wall member 50A with bottom is arranged in cylindrical portion 41 of division member 40A. Separation wall member 50A has a disc-shaped separation wall portion 51 and a cylindrical extension portion 52 erected from an outer circumferential edge of separation wall portion 51. Separation wall member 50A is inserted in cylindrical portion 41 of division member 40A such that extension portion 52 thereof is located on the side of above-described one end portion of the housing relative to separation wall portion 51. More specifically, separation wall member 50A is arranged at a position intermediate in the axial direction of cylindrical portion 41 so as to lie between gas generating agents 60 loaded in cylindrical portion 41.

Separation wall member 50A is fixed by being press-fitted into cylindrical portion 41 of division member 40A. Therefore, an outer circumferential surface of extension portion 52 of separation wall member 50A abuts on the inner circumferential surface of cylindrical portion 41 of division member 40A so that a gap is prevented from being provided in that portion.

Separation wall member 50A functions as a member dividing the space in the housing and separation wall portion 51 thereof functions as a site axially dividing the space in cylindrical portion 41 of division member 40A.

Separation wall member 50A is formed from a member sufficiently high in mechanical strength so as not to burst with increase in pressure even when gas generating agent 60 burns. For example, separation wall member 50A is formed from a member formed by press-working a plate-shaped member made of metal, and suitably a member formed from a steel plate of common steel, special steel, or the like (such as a cold rolled steel plate or a stainless steel plate).

In the space in the housing, a filter 70A is arranged in a space adjacent to the space where cup-shaped member 30A is arranged, which is located between cup-shaped member 30A and closing portion 12 of housing main body 10A. Filter 70A is formed from a cylindrical member having a hollow portion 71 extending in a direction the same as the axial direction of housing main body 10A, has one axial end surface abutting on closing portion 12, and has the other axial end surface abutting on top wall portion 32 of cup-shaped member 30A.

Filter 70A functions as cooling means for cooling a gas by depriving the gas of heat at a high temperature when the gas produced as a result of burning of gas generating agent 60 passes through this filter 70A and also functions as removal means for removing slag (residues) or the like contained in the gas. As described above, by making use of filter 70A formed from a cylindrical member, a flow resistance against a gas at the time of activation is suppressed and an efficient flow of the gas can be achieved.

A filter formed from an aggregate of metal wire rods or metal mesh materials suitably made of stainless steel or iron steel can be made use of as filter 70A. Specifically, a wire gauze of stocking stitch, a plain-woven wire gauze, an aggregate of crimped metal wire rods, or a material obtained by compressing the former with the use of a press is made use of. Alternatively, a material obtained by winding a perforated metal plate can also be made use of. In this case, as the perforated metal plate, for example, expanded metal obtained by making staggered cuts in a metal plate and providing holes by widening the cuts to thereby work the metal plate in a mesh, hook metal obtained by perforating a metal plate and collapsing burrs caused around a periphery of the hole for flattening, or the like can be made use of.

As shown in Figs. 1 to 5, in cylindrical portion 41 of division member 40A, a plurality of first communication holes 44 and a plurality of second communication holes 45 are provided along a circumferential direction and the axial direction of cylindrical portion 41. The plurality of first communication holes 44 are located on the side of above-described one end portion of the housing relative to separation wall member 50A arranged in division member 40A, and the plurality of second communication holes 45 are located on the side of above-described the other end portion of the housing relative to separation wall member 50A arranged in division member 40A. The plurality of first communication holes 44 and the plurality of communication holes 45 are provided for passage of the gas generated as a result of burning of gas generating agent 60.

As shown in Figs. 1 and 3, in circumferential wall portion 11 of the housing in a portion facing filter 70A, a plurality of gas discharge openings 13 are provided along the circumferential direction and the axial direction of circumferential wall portion 11. The plurality of gas discharge openings 13 serve to guide a gas which has passed through filter 70A to the outside of the housing.

In cylinder type gas generator 1A in the present embodiment described above, top wall portion 32 as a partition portion which is a part of cup-shaped member 30A as a partition member described above as well as cylindrical portion 41, annular portion 42, and skirt portion 43 of division member 40A divide the space in the housing into combustion chamber S1, gas passage chamber S2, and gas emission chamber S3, and separation wall portion 51 of separation wall member 50A described above divides combustion chamber S 1 into a first combustion chamber S1A and a second combustion chamber S1B. First combustion chamber S1A refers to a space in the space filled with gas generating agent 60, on the side of above-described one end portion of the housing relative to separation wall portion 51, and second combustion chamber S1B refers to a space therein on the side of above-described the other end portion of the housing relative to separation wall portion 51.

Specifically, a space including the space on the side of above-described one end portion of the housing relative to separation wall portion 51 of separation wall member 50A and on a radially inner side of cylindrical portion 41 in a portion of division member 40A provided with first communication hole 44 functions as first combustion chamber S1A accommodating gas generating agent 60. More specifically, first combustion chamber S1A is mainly defined by cylindrical portion 41 and skirt portion 43 of division member 40A, separation wall portion 51 and extension portion 52 of separation wall member 50A, circumferential wall portion 11 of housing main body 10A, and igniter assembly 20A. First combustion chamber S1A faces ignition portion 22a of igniter 22 assembled to above-described one axial end portion of the housing.

A space on the side of above-described the other end portion of the housing relative to separation wall portion 51 of separation wall member 50A and on the radially inner side of cylindrical portion 41 in a portion of division member 40A provided with second communication hole 45 functions as second combustion chamber S1B accommodating gas generating agent 60. More specifically, second combustion chamber S1B is defined by cylindrical portion 41 of division member 40A, separation wall portion 51 of separation wall member 50A, and top wall portion 32 of cup-shaped member 30A.

In the present embodiment, gas generating agent 60 arranged in first combustion chamber S1A and gas generating agent 60 arranged in second combustion chamber S1B are of the same type and they are identical to each other in shape, size, and composition.

A space radially outside cylindrical portion 41 of division member 40A which faces circumferential wall portion 11 of housing main body 10A functions as gas passage chamber S2 connecting first combustion chamber S1A and second combustion chamber S1B to each other. More specifically, gas passage chamber S2 is defined by cylindrical portion 41, annular portion 42, and skirt portion 43 of division member 40A as well as by circumferential wall portion 11 of housing main body 10A.

A space on the side of above-described the other end portion of the housing relative to top wall portion 32 as the partition portion which is a part of cup-shaped member 30A as the partition member functions as gas emission chamber S3 emitting the gas generated in first combustion chamber S1A and second combustion chamber S1B to the outside. More specifically, gas emission chamber S3 is defined by top wall portion 32 of cup-shaped member 30A as well as by circumferential wall portion 11 and closing portion 12 of housing main body 10A.

Division member 40A and separation wall member 50A are members formed to sufficiently be high in mechanical strength so as not to burst with increase in pressure even when gas generating agent 60 burns as described above. Therefore, when cylinder type gas generator 1A is activated, division member 40A and separation wall member 50A function as a pressure bulkhead which makes pressures in spaces (that is, first combustion chamber S1A, second combustion chamber S1B, and gas passage chamber S2) separated by division member 40A and separation wall member 50A different from one another.

Since the present embodiment is constructed such that separation wall member 50A is press-fitted into division member 40A so as not to provide a gap between division member 40A and separation wall member 50A, first combustion chamber S1A and second combustion chamber S1B separated from each other by separation wall portion 51 of separation wall member 50A are completely separated from each other by separation wall portion 51 so as not to communicate with each other in cylindrical portion 41 of division member 40A.

Cup-shaped member 30A is formed to sufficiently be small in thickness as a whole such that a part thereof bursts or melts as a result of increase in pressure or conduction of generated heat at the time when gas generating agent 60 burns as described above. Top wall portion 32 as the partition portion includes a first region 32a opposed to hollow portion 71 of filter 70A and a second region 32b abutting on a portion of the axial end surface of filter 70A located on the side of cup-shaped member 30A except for hollow portion 71 as being opposed thereto as shown in Fig. 3. Second region 32b is annularly located to surround the first region.

First region 32a of top wall portion 32 which is a portion covering hollow portion 71 of filter 70A faces second combustion chamber S1B filled with gas generating agent 60. A portion on a side of an inner circumferential edge of second region 32b of top wall portion 32 which is a portion covering the axial end surface of a portion of filter 70A except for hollow portion 71 faces second combustion chamber S1B filled with gas generating agent 60, and a portion of the second region on a side of an outer circumferential edge faces annular portion 42 of division member 40A.

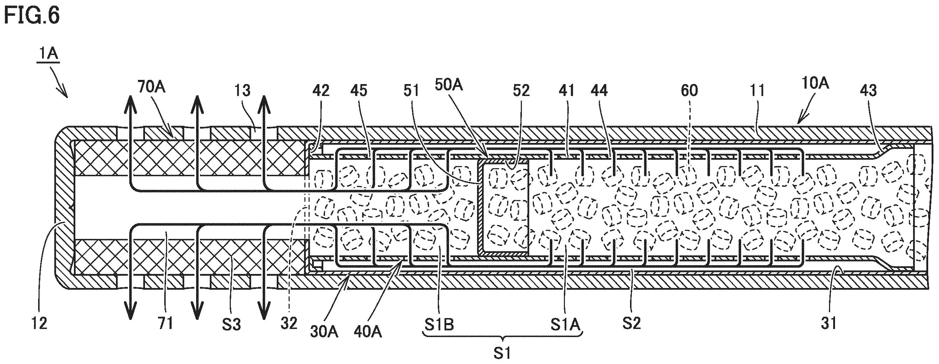

Therefore, when cylinder type gas generator 1A is activated, gas generating agent 60 burns and first region 32a of top wall portion 32 as the partition portion bursts or melts and thus a part of top wall portion 32 opens. Here, second region 32b does not burst and melt (that is, does not open) but remains (see Fig. 6).

The reason why second region 32b does not burst and melt in spite of being comparable in thickness to first region 32a is that second region 32b comes in contact with filter 70A and supported by filter 70A and accordingly heat of second region 32b positively conducts to filter 70A.

Therefore, when cylinder type gas generator 1A is activated, second region 32b of top wall portion 32 as the partition portion and filter 70A supporting the second region function as a pressure bulkhead which makes pressures in the spaces (that is, second combustion chamber S1B and gas emission chamber S3) separated from each other by second region 32b different from each other. By adopting such a construction, a portion of the axial end surface of filter 70A located on the side of cup-shaped member 30A except for hollow portion 71 is covered with second region 32b at the time of activation, and hence filter 70A can also be prevented from breaking.

Fig. 6 is a diagram schematically showing a flow of a gas at the time of activation of the cylinder type gas generator shown in Fig. 1. An operation of cylinder type gas generator 1A in the present embodiment when it is activated will now be described with reference to Fig. 6.

When a vehicle on which cylinder type gas generator 1A in the present embodiment is mounted collides, collision is sensed by collision sensing means separately provided in the vehicle and igniter 22 is activated based thereon by current feed caused by a control unit separately provided in the vehicle.

As shown in Fig. 6, gas generating agent 60 filled in first combustion chamber S1A is ignited by flame caused as a result of activation of igniter 22, and starts burning and generates a large amount of gas. The gas generated in first combustion chamber S1A flows into gas passage chamber S2 through first communication holes 44. The gas which flows into gas passage chamber S2 impinges on the inner circumferential surface of circumferential wall portion 11 of housing main body 10A along the radial direction of the housing and slag contained in the gas is removed to a considerable extent as it adheres to the inner circumferential surface of circumferential wall portion 11.

The gas which has impinged on the inner circumferential surface of circumferential wall portion 11 of housing main body 10A thereafter flows along the axial direction of the housing through gas passage chamber S2. The gas is cooled as heat is removed from the gas when the gas comes in contact with circumferential wall portion 11 of housing main body 10A. The gas which has flowed through gas passage chamber S2 thereafter flows into second combustion chamber S1B through second communication holes 45.

Some thermal particles flow into second combustion chamber S1B together with the gas. Therefore, gas generating agent 60 filled in second combustion chamber S1B is also ignited by the thermal particles, and starts burning and generates a large amount of gas.

The gas which is generated in first combustion chamber S1A and flows into second combustion chamber S1B through gas passage chamber S2 and the gas generated in second combustion chamber S1B increase a pressure and a temperature in second combustion chamber S1B, and accordingly, a part of top wall portion 32 of cup-shaped member 30A (that is, first region 32a described above) opens. Thus, the gas located in second combustion chamber S1B flows into gas emission chamber S3.

The gas which has flowed into gas emission chamber S3 flows along the axial direction through hollow portion 71 of filter 70A and impinges on an inner surface of closing portion 12 of housing main body 10A. Slag contained in the gas is removed to a considerable extent as it adheres to the inner surface of closing portion 12.

The gas which has impinged on the inner surface of closing portion 12 of housing main body 10A thereafter changes a direction to the radial direction and passes through filter 70A. The gas is cooled as it is deprived of heat by filter 70A and slag contained in the gas is removed by filter 70A.

The gas which has passed through filter 70A is discharged to the outside of the housing through gas discharge opening 13. The discharged gas is introduced into an air bag provided adjacently to cylinder type gas generator 1A to thereby expand and develop the air bag.

In cylinder type gas generator 1A in the present embodiment described above, cup-shaped member 30A as the partition member and division member 40A are arranged in the housing so as to divide the space in the housing into combustion chamber S1, gas passage chamber S2, and gas emission chamber S3. Separation wall member 50A is arranged in cylindrical portion 41 so as to divide combustion chamber S 1 into first combustion chamber S1A located on the side of igniter 22 and second combustion chamber S1B located on the side of filter 70A in such a manner that separation wall member 50A lies between gas generating agents 60 with which cylindrical portion 41 of division member 40A is filled.

Therefore, while a construction for efficiently cooling the gas generated in first combustion chamber S1A is realized by providing gas passage chamber S2, a portion for introducing the gas from gas passage chamber S2 into gas emission chamber S3 is provided as second combustion chamber S1B filled with gas generating agent 60, so that efficiency in use of the space in the housing is enhanced and cylinder type gas generator 1A as a whole can be reduced in length. Therefore, by adopting such a construction, a cylinder type gas generator small in size which can efficiently cool a gas at a high temperature generated as a result of burning of gas generating agent 60 can be obtained.

By adopting such a construction, in manufacturing of cylinder type gas generator 1A in the present embodiment, the cylinder type gas generator can be assembled in such a simple operation that a sub assembly accommodating division member 40A, separation wall member 50A, and gas generating agent 60, to which igniter assembly 20A is assembled, is prepared in advance, and the sub assembly is inserted in housing main body 10A in which filter 70 has been inserted in advance and fixed to housing main body 10A. In addition, in preparing the sub assembly as well, the sub assembly can be assembled in such a simple operation that insertion of division member 40A into cup-shaped member 30A, filling with gas generating agent 60 to be arranged in second combustion chamber S1B, press-fitting of separation wall member 50A, filling with gas generating agent 60 to be arranged in first combustion chamber S1A, insertion of cushion member 61, and insertion and fixing of igniter assembly 20A are performed in this order. Therefore, by adopting such a construction, a cylinder type gas generator which can more readily and inexpensively be manufactured than a conventional structure can also be obtained.

Furthermore, when such a construction is adopted, an amount of gas generating agent 60 to be filled in each of first combustion chamber S1A and second combustion chamber S1B can readily be adjusted by variously changing a position of arrangement of separation wall member 50A in the axial direction of division member 40A. Therefore, with such adjustment, output characteristics of cylinder type gas generator 1A can be varied (for example, rise of gas output at an initial stage of activation is varied or a time period during which peak of gas output is maintained is varied) and the cylinder type gas generator can also readily be tuned to obtain desired output characteristics.

### (First Modification)

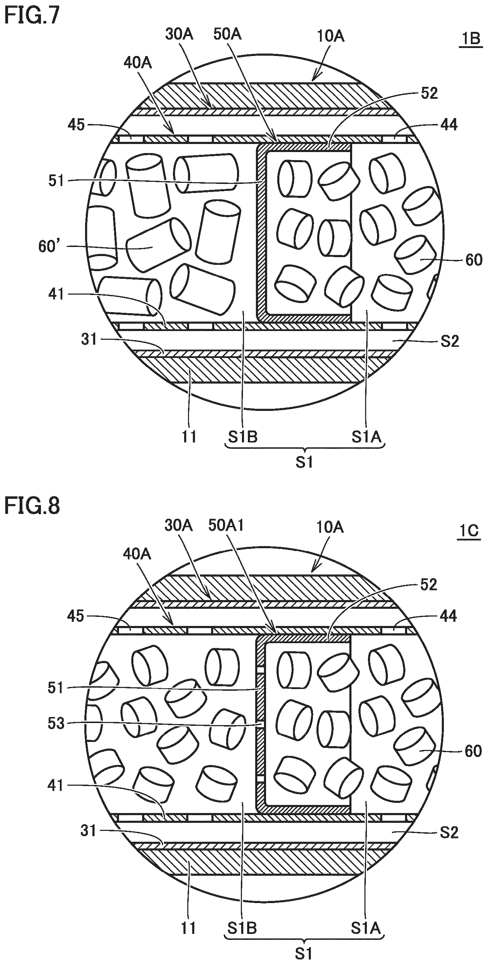

Fig. 7 is an enlarged cross-sectional view of a portion in the vicinity of the separation wall portion of a cylinder type gas generator according to a first modification. A cylinder type gas generator 1B according to the first modification based on the present embodiment will now be described with reference to Fig. 7.

As shown in Fig. 7, cylinder type gas generator 1B according to the first modification is different in construction from cylinder type gas generator 1A in the present embodiment described above only in that gas generating agent 60 arranged in first combustion chamber S1A is different in type from a gas generating agent 60' arranged in second combustion chamber S1B. More specifically, gas generating agent 60' arranged in second combustion chamber S1B is different from gas generating agent 60 arranged in first combustion chamber S1A in shape and size.

Thus, gas generating agent 60 arranged in first combustion chamber S1A is different in type from gas generating agent 60' arranged in second combustion chamber S1B and selection thereof is variously changed so that output characteristics of cylinder type gas generator 1B can further be varied. Therefore, by adopting such a construction, in addition to the effect described above, an effect of increase in degree of freedom in tuning of output characteristics is obtained. A factor of a gas generating agent affecting output characteristics includes also composition other than the shape and the size described above, and in selection of a type of a gas generating agent, a gas generating agent different in at least any of shape, size, and composition should only be employed.

### (Second Modification)

Fig. 8 is an enlarged cross-sectional view of a portion in the vicinity of the separation wall portion of a cylinder type gas generator according to a second modification. A cylinder type gas generator 1C according to the second modification based on the present embodiment will now be described with reference to Fig. 8.

As shown in Fig. 8, cylinder type gas generator 1C according to the second modification is different from cylinder type gas generator 1A in the present embodiment described above only in including a separation wall member 50A1 provided with an auxiliary communication hole 53 at a prescribed position instead of separation wall member 50A. More specifically, in separation wall member 50A1, a plurality of auxiliary communication holes 53 are provided in separation wall portion 51 which is a portion separating first combustion chamber S1A and second combustion chamber S1B from each other. Thus, first combustion chamber S1A and second combustion chamber S1B communicate with each other through auxiliary communication holes 53 in cylindrical portion 41 of division member 40A.

According to such a construction, some of the gas generated in first combustion chamber S1A at the time of activation reaches second combustion chamber S1B through auxiliary communication holes 53 without passing through gas passage chamber S2. By setting an area of opening of auxiliary communication holes 53 to sufficiently be small, however, most of the gas generated in first combustion chamber S1A reaches second combustion chamber S1B through first communication holes 44, gas passage chamber S2, and second communication holes 45, and hence the gas generated in first combustion chamber S1A can efficiently be cooled as in the present embodiment described above.

Thus, when auxiliary communication holes 53 are provided in separation wall portion 51, output characteristics of cylinder type gas generator 1C can further be varied by variously changing an area of opening or the number of communication holes. Therefore, by adopting such a construction, in addition to the effect described above, an effect of increase in degree of freedom in tuning of output characteristics can further be obtained.

### (Third Modification)

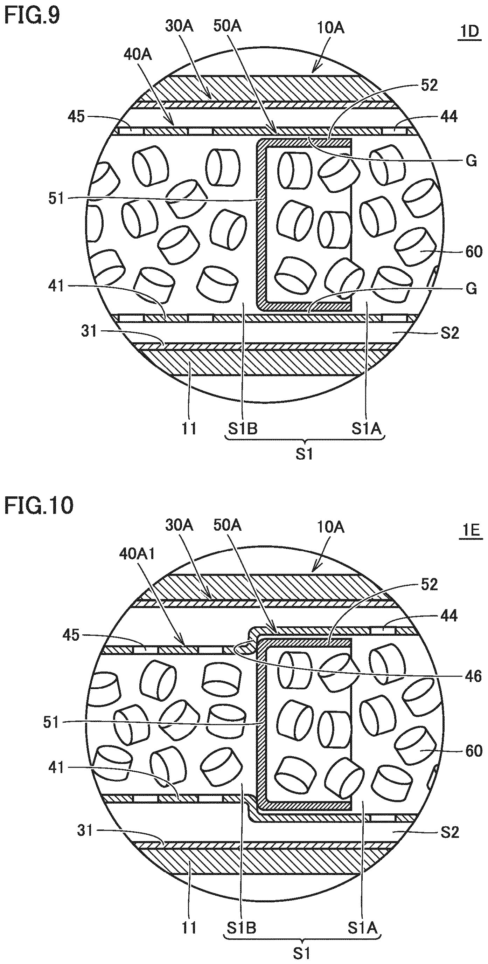

Fig. 9 is an enlarged cross-sectional view of a portion in the vicinity of the separation wall portion of a cylinder type gas generator according to a third modification. A cylinder type gas generator 1D according to the third modification based on the present embodiment will now be described with reference to Fig. 9.

As shown in Fig. 9, cylinder type gas generator 1D according to the third modification is different in construction from cylinder type gas generator 1A in the present embodiment described above only in that separation wall member 50A is loosely fitted into cylindrical portion 41 of division member 40A without being press-fitted therein. Loose fitting refers to a state that the outer circumferential surface of separation wall member 50A and the inner circumferential surface of cylindrical portion 41 of division member 40A are not necessarily in contact with each other around the entire circumference but the separation wall member is inserted with a slight gap (allowance) G being interposed.

According to such a construction, first combustion chamber S1A and second combustion chamber S1B communicate with each other through gap G provided between separation wall member 50A described above and cylindrical portion 41 of division member 40A. Therefore, according to such a construction, as in cylinder type gas generator 1C according to the second modification described above, first combustion chamber S1A and second combustion chamber S1B communicate with each other in a part of the inside of cylindrical portion 41 of division member 40A.

Therefore, with such a construction as well, an effect the same as described in the second modification described above can be obtained. Furthermore, with such a construction, since separation wall member 50A should only loosely be fitted into cylindrical portion 41 of division member 40A without being press-fitted therein in assembly, an assembly operation is also further advantageously facilitated.

When such a construction is adopted, though separation wall member 50A is pushed toward second combustion chamber S1B with increase in internal pressure in first combustion chamber S1A at the time of activation, second combustion chamber S1B is also filled with gas generating agent 60, and hence the separation wall member does not immediately move. Though slightly delayed as compared with burning in first combustion chamber S1A, gas generating agent 60 starts burning also in second combustion chamber S1B and hence an internal pressure in second combustion chamber S1B also increases soon. Therefore, balance between the internal pressure in first combustion chamber S1A and the internal pressure in second combustion chamber S1B is substantially maintained and movement of separation wall member 50A is kept small.

### (Fourth Modification)

Fig. 10 is an enlarged cross-sectional view of a portion in the vicinity of the separation wall portion of a cylinder type gas generator according to a fourth modification. A cylinder type gas generator IE according to the fourth modification based on the present embodiment will now be described with reference to Fig. 10.

As shown in Fig. 10, cylinder type gas generator IE according to the fourth modification is different from cylinder type gas generator 1D according to the third modification described above only in including a division member 40A1 different in construction from division member 40A. Specifically, division member 40A1 is constructed such that cylindrical portion 41 in a portion serving as the partition between second combustion chamber S1B and gas passage chamber S2 is smaller in inner diameter than cylindrical portion 41 in a portion serving as the partition between first combustion chamber S1A and gas passage chamber S2 and a connection portion 46 connecting these portions to each other has a stepped shape. Separation wall member 50A is loosely fitted on a side of first combustion chamber S1A relative to connection portion 46 having the stepped shape, and an outer diameter the separation wall member is greater than the inner diameter of cylindrical portion 41 in the portion serving as the partition between second combustion chamber S1B and gas passage chamber S2.

According to such a construction, connection portion 46 having the stepped shape provided in cylindrical portion 41 functions as a stop portion restricting movement of separation wall member 50A toward second combustion chamber S1B and movement of separation wall member 50A which may be caused by increase in internal pressure in first combustion chamber S1A toward second combustion chamber S1B can reliably be prevented. Therefore, by adopting such a construction, in addition to the effect described in the fourth modification described above, an effect to realize a more stable operation is obtained.

Though description has been given in the present fourth modification with reference to an example in which a stop portion is provided by forming the stepped shape as described above as the stop portion in cylindrical portion 41 of division member 40A1, alternatively, the stop portion can naturally be provided by providing an annular protrusion or a sequence of protrusions on the inner circumferential surface of cylindrical portion 41. Alternatively, the stop portion may be provided by providing protrusions on the outer circumferential surface of separation wall member 50A and engaging the protrusions with holes provided in cylindrical portion 41.

### (Second Embodiment)

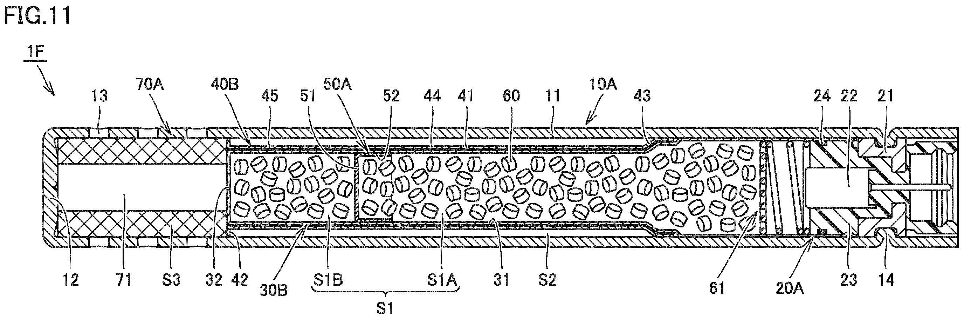

Fig. 11 is a schematic diagram of a cylinder type gas generator in a second embodiment of the present invention. A cylinder type gas generator 1F according to the present embodiment will be described below with reference to Fig. 11.

As shown in Fig. 11, cylinder type gas generator 1F in the present embodiment is different from cylinder type gas generator 1A in the first embodiment described above in including a cup-shaped member 30B and a division member 40B different in construction from cup-shaped member 30A and division member 40A, respectively.

Specifically, division member 40B is not accommodated in cup-shaped member 30B but annular portion 42 and skirt portion 43 thereof are arranged to directly abut on the inner circumferential surface of circumferential wall portion 11 of housing main body 10A. Thus, division member 40B is arranged at a prescribed distance from each of above-described one and the other end portions of the housing in the axial direction of the housing. Annular portion 42 abuts on the axial end portion of a portion of filter 70A except for hollow portion 71.

Division member 40B is fixed to the housing as annular portion 42 and skirt portion 43 described above are press-fitted into circumferential wall portion 11 of the housing. Thus, division member 40B is constructed so as not to readily move with respect to the housing. Cylindrical folded back portion 42a (see Fig. 3) described above is not provided in annular portion 42 of division member 40B.

Cup-shaped member 30B is inserted in cylindrical portion 41 from the side of above-described one end portion of the housing such that a part thereof is arranged in cylindrical portion 41 of division member 40B. Cup-shaped member 30B accommodates separation wall member 50A, gas generating agent 60, and cushion member 61.

Cup-shaped member 30B is inserted in cylindrical portion 41 of division member 40B such that top wall portion 32 reaches a position coinciding with an axial end portion of division member 40B located on the side of above-described the other end portion of the housing. Thus, top wall portion 32 is opposed to hollow portion 71 of filter 70A and abuts on the axial end portion of the portion of filter 70A except for hollow portion 71. In the present embodiment as well, cup-shaped member 30B functions as the partition member dividing the space in the housing, and top wall portion 32 functions as the partition portion axially dividing the space in the housing.

Separation wall member 50A is provided at a position in cup-shaped member 30B in the inside of cylindrical portion 41 of division member 40B. More specifically, separation wall member 50A is arranged at a position intermediate in the axial direction of cylindrical portion 41 so as to lie between gas generating agents 60 loaded in cup-shaped member 30B in the inside of cylindrical portion 41 of division member 40B.

When such a construction is adopted, first communication holes 44 for communication between first combustion chamber S1A and gas passage chamber S2 and second communication holes 45 for communication between gas passage chamber S2 and second combustion chamber S1B are both covered with sidewall portion 31 of cup-shaped member 30B. Sidewall portion 31 is formed to sufficiently be small in thickness as a whole such that a part thereof bursts or melts with increase in pressure or conduction of generated heat when gas generating agent 60 burns. Therefore, communication between first combustion chamber S1A and gas passage chamber S2 and communication between gas passage chamber S2 and second combustion chamber S1B are both achieved at the time of activation.

In cylinder type gas generator 1F in the present embodiment described above as well, cup-shaped member 30B as the partition member and division member 40B are arranged in the housing so that the space in the housing is divided into combustion chamber S1, gas passage chamber S2, and gas emission chamber S3. Separation wall member 50A is arranged in cylindrical portion 41 so as to divide combustion chamber S 1 into first combustion chamber S1A located on the side of igniter 22 and second combustion chamber S1B located on the side of filter 70A in such a manner that separation wall member 50A lies between gas generating agents 60 with which cylindrical portion 41 of division member 40B is filled.

Therefore, with cylinder type gas generator 1F in the present embodiment as well, an operation comparable to the operation described in the first embodiment described above is performed at the time of activation and an effect the same as in the first embodiment described above is obtained.

### (Third Embodiment)

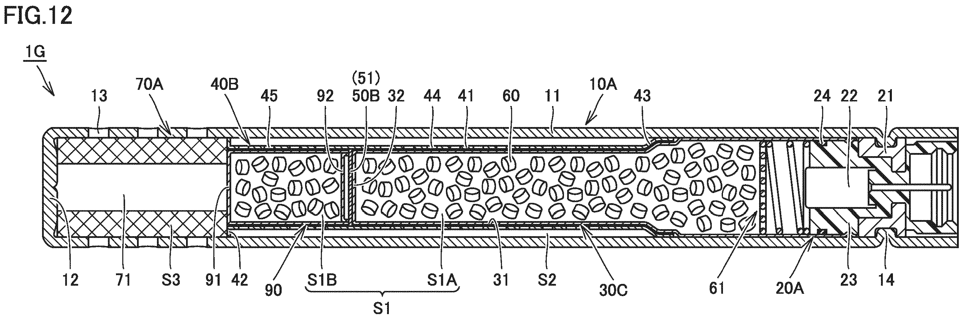

Fig. 12 is a schematic diagram of a cylinder type gas generator in a third embodiment of the present invention. A cylinder type gas generator 1G according to the present embodiment will be described below with reference to Fig. 12.

As shown in Fig. 12, cylinder type gas generator 1G in the present embodiment is different from cylinder type gas generator 1F in the second embodiment described above in that a cup-shaped member 30C and separation wall member 50B different in construction from cup-shaped member 30B and separation wall member 50A are provided and second combustion chamber S1B is filled with gas generating agent 60 by using a filling structure different from that in the second embodiment.

Specifically, cup-shaped member 30C is constructed such that top wall portion 32 is arranged at a position intermediate in the axial direction of cylindrical portion 41 of division member 40B and cup-shaped member 30C accommodates gas generating agent 60 arranged in first combustion chamber S1A and cushion member 61.

Separation wall member 50B consists of separation wall portion 51 having a disc-like shape and provided at a position inside cylindrical portion 41 of division member 40B and adjacent to top wall portion 32 of cup-shaped member 30C described above. Separation wall member 50B is arranged on the side of above-described the other end portion of the housing relative to cup-shaped member 30C. Separation wall member 50B may be press-fitted or loosely fitted into cylindrical portion 41 of division member 40B.

A sealed container 90 is arranged in the space inside cylindrical portion 41 of division member 40B on the side of above-described the other end portion of the housing relative to separation wall member 50B. Sealed container 90 includes a cylindrical cup body 91 with bottom and a cap body 92 closing an opening in cup body 91. In sealed container 90, a space provided in sealed container 90 is hermetically sealed from the outside of sealed container 90 by combination and joint of cup body 91 and cap body 92 with each other. Gas generating agent 60 arranged in second combustion chamber S1B is accommodated in the space in sealed container 90.

Similarly to cup-shaped member 30C, a part of cup body 91 and cap body 92 bursts or melts with increase in pressure or conduction of generated heat when gas generating agent 60 burns as a result of activation of igniter 22, and a metal member formed by press-working of a thin metal plate (foil) made of copper, aluminum, a copper alloy, an aluminum alloy, or the like, or a resin member formed by injection molding or sheet forming can be used for a material therefor. For example, brazing, bonding, or tightening by winding (fastening) is suitably employed for joint between cup body 91 and cap body 92. Hermeticity can also further be enhanced by separately using a sealant in joint.

Sealed container 90 is inserted in cylindrical portion 41 of division member 40B such that a top wall portion of cup body 91 reaches a position coinciding with the axial end portion of division member 40B located on the side of above-described the other end portion of the housing. Thus, the top wall portion of cup body 91 is opposed to hollow portion 71 of filter 70A and abuts on the axial end portion of the portion of filter 70A except for hollow portion 71. In the present embodiment, sealed container 90 functions as the partition member dividing the space in the housing and the top wall portion of cup body 91 functions as the partition portion axially dividing the space in the housing.

In cylinder type gas generator 1G in the present embodiment described above as well, sealed container 90 as the partition member and division member 40B are arranged in the housing so that the space in the housing is divided into combustion chamber S1, gas passage chamber S2, and gas emission chamber S3. Separation wall member 50B is arranged in cylindrical portion 41 so as to divide combustion chamber S 1 into first combustion chamber S1A located on the side of igniter 22 and second combustion chamber S1B located on the side of filter 70A in such a manner that separation wall member 50B lies between gas generating agents 60 with which cylindrical portion 41 of division member 40B is filled.

Therefore, with cylinder type gas generator 1G in the present embodiment as well, an operation comparable to the operation described in the first embodiment described above is performed at the time of activation and an effect the same as in the second embodiment described above is obtained.

### (Fourth Embodiment)

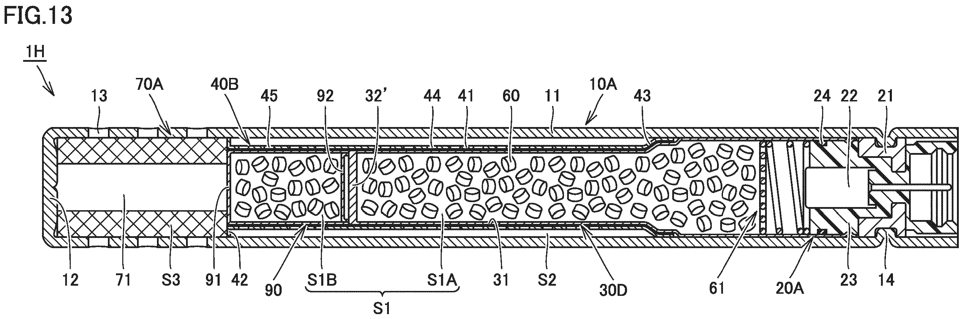

Fig. 13 is a schematic diagram of a cylinder type gas generator in a fourth embodiment of the present invention. A cylinder type gas generator 1H according to the present embodiment will be described below with reference to Fig. 13.

As shown in Fig. 13, cylinder type gas generator 1H in the present embodiment is different from cylinder type gas generator 1G in the third embodiment described above in including a cup-shaped member 30D different in construction from cup-shaped member 30C and accordingly not including separation wall member 50B.

Cup-shaped member 30D is constructed such that a top wall portion 32' is arranged at a position intermediate in the axial direction of cylindrical portion 41 of division member 40B and top wall portion 32' is constructed to sufficiently be large in thickness so as not to burst or melt with increase in pressure or conduction of generated heat even when gas generating agent 60 burns as a result of activation of igniter 22. Thus, in the present embodiment, cup-shaped member 30D functions as a separation wall member dividing the space in the housing and top wall portion 32' functions as a separation wall portion axially dividing the space in cylindrical portion 41 of division member 40A.

Cup-shaped member 30D constructed as above can be formed, for example, from a molding made of an aluminum alloy. Specifically, cup-shaped member 30D constructed as above can inexpensively and readily be fabricated by making use of deep-drawing (what is called impact molding) making use of such a phenomenon that slug (a lump of an aluminum alloy) extends upward along a punch by giving an impact with the punch to slug employed as a material.

In the space in cylindrical portion 41 of division member 40B adjacent to top wall portion 32' of cup-shaped member 30D described above, sealed container 90 accommodating gas generating agent 60 arranged in second combustion chamber S1B is arranged.

In cylinder type gas generator 1G in the present embodiment described above as well, sealed container 90 as the partition member and division member 40B are arranged in the housing so that the space in the housing is divided into combustion chamber S1, gas passage chamber S2, and gas emission chamber S3. Top wall portion 32' of cup-shaped member 30D functioning as the separation wall portion is arranged in cylindrical portion 41 so as to divide combustion chamber S 1 into first combustion chamber S1A located on the side of igniter 22 and second combustion chamber S1B located on the side of filter 70A in such a manner that top wall portion 32' lies between gas generating agents 60 with which cylindrical portion 41 of division member 40B is filled.

Therefore, with cylinder type gas generator 1H in the present embodiment as well, an operation comparable to the operation described in the first embodiment described above is performed at the time of activation and an effect the same as in the third embodiment described above is obtained. Furthermore, since a part of cup-shaped member 30D also functions as the separation wall portion, the number of parts can also advantageously be reduced.

### (Fifth Embodiment)

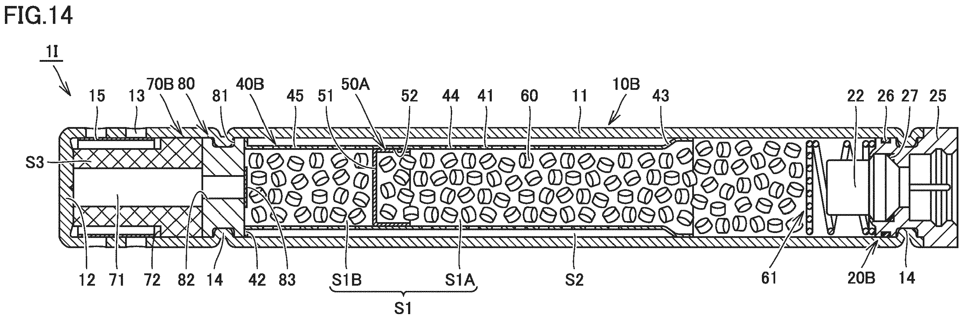

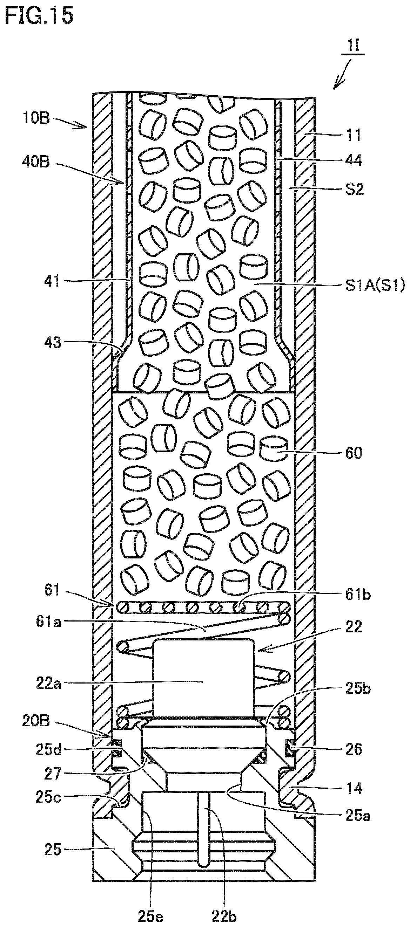

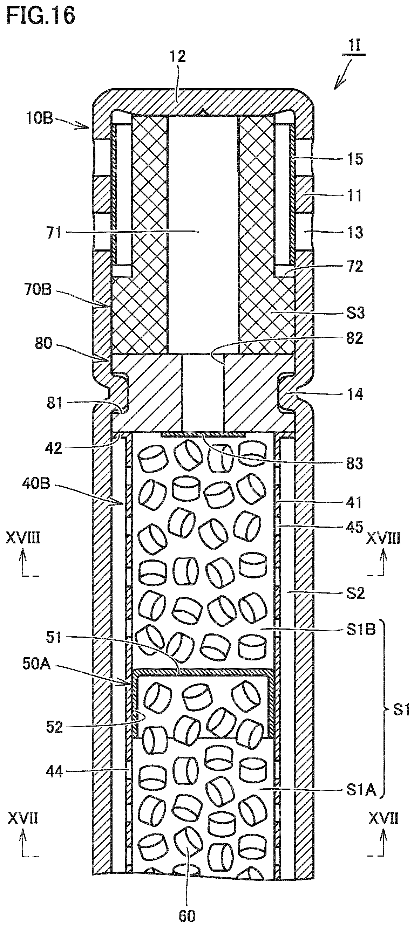

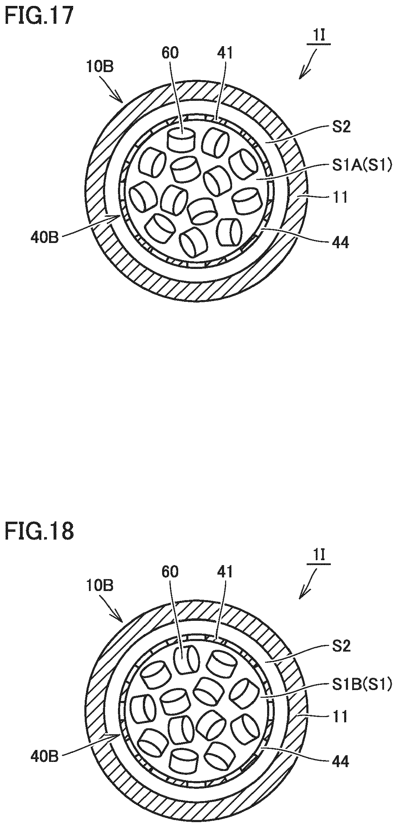

Fig. 14 is a schematic diagram of a cylinder type gas generator in a fifth embodiment of the present invention. Figs. 15 and 16 are an enlarged cross-sectional view of a portion in the vicinity of an igniter and an enlarged cross-sectional view of a portion in the vicinity of a filter, of the cylinder type gas generator shown in Fig. 14, respectively. Figs. 17 and 18 are cross-sectional views along the lines XVII-XVII and XVIII-XVIII shown in Fig. 16, respectively. A cylinder type gas generator 1I according to the present embodiment will be described below with reference to Figs. 14 to 18.

As shown in Figs. 14 to 18, cylinder type gas generator 1I in the present embodiment is different from cylinder type gas generator 1A in the first embodiment described above mainly in including a housing main body 10B different in construction from housing main body 10A, including an igniter assembly 20B different in construction from igniter assembly 20A, including a partition member 80 including a portion functioning as a partition portion instead of cup-shaped member 30A, and including a filter 70B different in construction from filter 70A.

Specifically, as shown in Figs. 14 and 15, igniter assembly 20B includes igniter 22, a holder 25, and a pair of sealing members 26 and 27.

Holder 25 is formed from a cylindrical member having a through portion 25a extending along a direction the same as the axial direction of housing main body 10B and formed from a member made of a metal such as stainless steel, iron steel, an aluminum alloy, or a stainless alloy. Holder 25 has a fastening portion 25b for fixing by fastening of igniter 22 which will be described later at an end portion on a side facing the space in the housing. Holder 25 has an annular groove portion 25c for fixing by fastening of housing main body 10B at a prescribed position in an outer circumferential surface thereof, and annular groove portion 25c is provided to extend along a circumferential direction in the outer circumferential surface of holder 25. Another annular groove portion 25d different from annular groove portion 25c described above is further provided in the outer circumferential surface of holder 25. Additionally, a recess portion 25e serving as a female connector portion described above is provided in a portion of holder 25 exposed to the outside.

Igniter assembly 20B is fixed to housing main body 10B so as to close an opening end of housing main body 10B. Specifically, with a part of igniter assembly 20B being inserted in the opening end of housing main body 10B, circumferential wall portion 11 of housing main body 10B in a portion corresponding to annular groove portion 25c provided in the outer circumferential surface of holder 25 of igniter assembly 20B is decreased in diameter radially inward and engaged with annular groove portion 25c so that igniter assembly 20B is fixed by fastening to housing main body 10B. Thus, one axial end portion of the housing is formed by igniter assembly 20B. The other axial end portion of the housing is formed by closing portion 12 of housing main body 10B.

Igniter 22 is fixed by fastening as being inserted in through portion 25a of holder 25. More specifically, igniter 22 is clamped by and fixed to holder 25 by fastening fastening portion 25b described above with igniter 22 having been inserted in through portion 25a and abutting on holder 25.

Sealing member 26 formed from an O ring is accommodated in annular groove portion 25d. Thus, sealing member 26 accommodated in annular groove portion 25d provided in holder 25 lies between holder 25 and circumferential wall portion 11 of housing main body 10B so that hermeticity in that portion is ensured.

Furthermore, sealing member 27 formed from an O ring is interposed between igniter 22 and holder 25. Sealing member 27 serves to prevent a gap from being provided between igniter 22 and holder 25. With the sealing member, a space in the housing is hermetically sealed.

As shown in Figs. 14 and 16, partition member 80 functions as a partition portion axially dividing the space in the housing and is arranged at a prescribed position in the housing. Partition member 80 is in a disc shape and has an annular groove portion 81 for fixing by fastening which will be described later at a prescribed position in an outer circumferential surface thereof. Annular groove portion 81 is provided to extend along the circumferential direction in the outer circumferential surface of partition member 80.

Partition member 80 is fixed to housing main body 10B so as to axially divide the space in the housing at a position intermediate in the axial direction of housing main body 10B. Specifically, with partition member 80 being inserted in housing main body 10B, circumferential wall portion 11 of housing main body 10B in a portion corresponding to annular groove portion 81 provided in the outer circumferential surface of partition member 80 is decreased in diameter radially inward and engaged with annular groove portion 81 so that partition member 80 is fixed by fastening to housing main body 10B.

Such fixing by fastening is called omnidirectional fastening in which circumferential wall portion 11 of housing main body 10B is substantially uniformly decreased in diameter radially inward. With such omnidirectional fastening, fastening portion 14 is provided in circumferential wall portion 11 of housing main body 10B and fastening portion 14 is in intimate contact with annular groove portion 81. Thus, a gap is prevented from being provided between housing main body 10B and partition member 80.

Partition member 80 is provided with a third communication hole 82 extending along the axial direction of the housing. Third communication hole 82 serves for communication of the space in the housing divided by partition member 80. A sealing tape 83 is affixed to a main surface of partition member 80 located on the side of igniter 22 so as to close third communication hole 82. An aluminum foil in which a tacky member is applied to one surface is made use of as sealing tape 83.

Similarly to holder 25 of igniter assembly 20B, partition member 80 is formed from a member made of a metal such as stainless steel, iron steel, an aluminum alloy, or a stainless alloy.

As shown in Figs. 14 to 16, division member 40B is arranged such that annular portion 42 and skirt portion 43 directly abut on the inner circumferential surface of circumferential wall portion 11 of housing main body 10B. Thus, division member 40B is arranged at a prescribed distance from each of above-described one and the other end portions of the housing in the axial direction of the housing. Annular portion 42 abuts on the axial end portion of a portion of partition member 80 except for third communication hole 82.

Division member 40B is fixed to the housing as annular portion 42 and skirt portion 43 described above are press-fitted into circumferential wall portion 11 of the housing. Thus, division member 40B is constructed so as not to readily move with respect to the housing. Cylindrical folded back portion 42a (see Fig. 3) described above is not provided in annular portion 42 of division member 40B.

In the space in the housing divided by division member 40B described above, gas generating agent 60 is loaded in a portion including a space on a side where igniter assembly 20B is located relative to partition member 80 in the inside of cylindrical portion 41 of division member 40B, and cushion member 61 is arranged in the space on the side where igniter assembly 20B is located relative to division member 40B as being interposed between igniter assembly 20B and gas generating agent 60.

Separation wall member 50A is arranged at a prescribed position in the space inside cylindrical portion 41 of division member 40B. More specifically, separation wall member 50A is arranged at a position intermediate in the axial direction of cylindrical portion 41 so as to lie between gas generating agents 60 loaded in cylindrical portion 41. Separation wall member 50A may be press-fitted or loosely fitted into cylindrical portion 41 of division member 40B.

In the space in the housing, filter 70B is arranged in a space which is adjacent to the space where partition member 80 is arranged and lies between partition member 80 and closing portion 12 of housing main body 10B. An annular step portion 72 is provided at the axial end portion of filter 70B located on the side of closing portion 12. Annular step portion 72 is provided to define a gap between filter 70B and gas discharge opening 13 provided in circumferential wall portion 11 of housing main body 10B so that the gas stays in that portion and efficiency in use of filter 70B can be enhanced.

A sealing tape 15 is affixed to a main surface of circumferential wall portion 11 of housing main body 10B located on the side of filter 70B so as to close gas discharge opening 13. An aluminum foil in which a tacky member is applied to one surface is made use of as sealing tape 15. Hermeticity in the space in the housing is thus ensured.

In cylinder type gas generator 1I in the present embodiment described above, as shown in Figs. 14 to 18, partition member 80 described above as well as cylindrical portion 41, annular portion 42, and skirt portion 43 of division member 40B divide the space in the housing into combustion chamber S1, gas passage chamber S2, and gas emission chamber S3, and separation wall portion 51 of separation wall member 50A described above divides combustion chamber S1 into first combustion chamber S1A and second combustion chamber S1B. First combustion chamber S1A refers to a space in the space filled with gas generating agent 60, on the side of above-described one end portion of the housing relative to separation wall portion 51, and second combustion chamber S1B refers to a space therein, on the side of above-described the other end portion of the housing relative to separation wall portion 51.

Specifically, the space including the space on the side of above-described one end portion of the housing relative to separation wall portion 51 of separation wall member 50A and on the radially inner side of the portion where first communication hole 44 in division member 40B is provided relative to cylindrical portion 41 functions as first combustion chamber S1A accommodating gas generating agent 60. More specifically, first combustion chamber S1A is mainly defined by cylindrical portion 41 and skirt portion 43 of division member 40B, separation wall portion 51 and extension portion 52 of separation wall member 50A, circumferential wall portion 11 of housing main body 10A, and igniter assembly 20B. First combustion chamber S1A faces ignition portion 22a of igniter 22 assembled to above-described one axial end portion of the housing.

The space on the side of above-described the other end portion of the housing relative to separation wall portion 51 of separation wall member 50A and on the radially inner side of cylindrical portion 41 in the portion provided with second communication hole 45 of division member 40B functions as second combustion chamber S1B accommodating gas generating agent 60. More specifically, second combustion chamber S1B is defined by cylindrical portion 41 of division member 40B, separation wall portion 51 of separation wall member 50A, and partition member 80.

The space on the radially outer side of cylindrical portion 41 of division member 40B and facing circumferential wall portion 11 of housing main body 10B functions as gas passage chamber S2 connecting first combustion chamber S1A and second combustion chamber S1B to each other. More specifically, gas passage chamber S2 is defined by cylindrical portion 41, annular portion 42, and skirt portion 43 of division member 40B as well as by circumferential wall portion 11 of housing main body 10B.

The space on the side of above-described the other end portion of the housing relative to partition member 80 functions as gas emission chamber S3 emitting the gas generated in first combustion chamber S1A and second combustion chamber S1B to the outside. More specifically, gas emission chamber S3 is defined by partition member 80 as well as by circumferential wall portion 11 and closing portion 12 of housing main body 10B.

Division member 40B, separation wall member 50A, and partition member 80 are members formed to sufficiently be high in mechanical strength so as not to burst with increase in pressure even when gas generating agent 60 burns as described above. Therefore, when cylinder type gas generator 1I is activated, division member 40B, separation wall member 50A, and partition member 80 function as a pressure bulkhead which makes pressures in the spaces (that is, first combustion chamber S1A, second combustion chamber S1B, gas passage chamber S2, and gas emission chamber S3) divided by division member 40B, separation wall member 50A, and partition member 80 different from one another.

Thus, in cylinder type gas generator 1I in the present embodiment as well, the space in the housing is divided into combustion chamber S1, gas passage chamber S2, and gas emission chamber S3 by arranging partition member 80 and division member 40B in the housing. Separation wall member 50A is arranged in cylindrical portion 41 so as to divide combustion chamber S 1 into first combustion chamber S1A located on the side of igniter 22 and second combustion chamber S1B located on the side of filter 70A in such a manner that separation wall member 50A lies between gas generating agents 60 with which cylindrical portion 41 of division member 40B is filled.

Therefore, in cylinder type gas generator 1I in the present embodiment, sealing tape 83 affixed to partition member 80 and sealing tape 15 affixed to housing main body 10B burst or melt at the time of activation, so that an operation comparable to the operation described in the first embodiment described above is performed and an effect the same as in the first embodiment described above is obtained.

### (Sixth Embodiment)

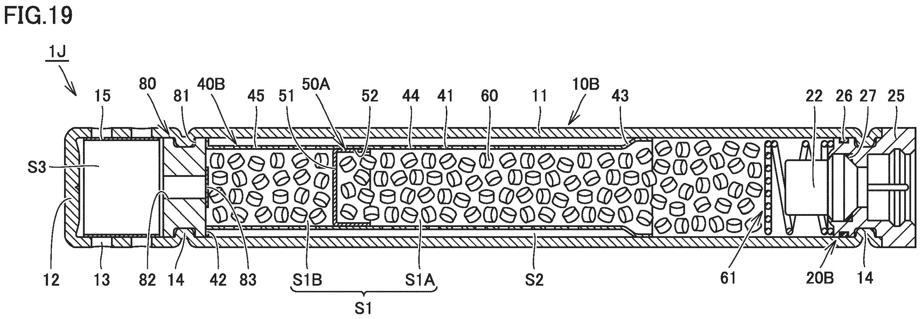

Fig. 19 is a schematic diagram of a cylinder type gas generator in a sixth embodiment of the present invention. A cylinder type gas generator 1J in the present embodiment will be described below with reference to Fig. 19.

As shown in Fig. 19, cylinder type gas generator 1J in the present embodiment is different from cylinder type gas generator 1I in the fifth embodiment described above mainly in not including filter 70B.

Specifically, in cylinder type gas generator 1J in the present embodiment, the space in gas emission chamber S3 defined by partition member 80 as well as by circumferential wall portion 11 and closing portion 12 of housing main body 10B is constructed simply as a space having a prescribed capacity where no component is arranged in particular. The gas which flows into gas emission chamber S3 at the time of activation impinges on the inner surface of closing portion 12 of housing main body 10B, thereafter changes its direction in the radial direction, and is discharged through gas discharge opening 13 to the outside.

With such a construction, since no filter is placed in the housing, emission of slag contained in the gas to the outside through gas discharge opening 13 at the time of activation is concerned. In view of ability to catch a considerable amount of slag owing to impingement of the gas to circumferential wall portion 11 of housing main body 10B in gas passage chamber S2 and ability to catch a considerable amount of slag owing to impingement of the gas also to closing portion 12 of housing main body 10B in gas emission chamber S3, it is estimated that emission of slag through gas discharge opening 13 can sufficiently be prevented. In that case, a construction in which no filter is placed as in the present embodiment can be adopted.

Therefore, with cylinder type gas generator 1J in the present embodiment as well, an effect substantially the same as in the fifth embodiment described above can be obtained.

Though each of the first to sixth embodiments and modifications thereof of the present invention described above is constructed to include a space in which combustion chamber S 1 is located on the side of igniter assembly 20A or 20B relative to division member 40A or 40B, the construction does not necessarily have to be as such. Igniter assembly 20A or 20B may be fixed as being inserted in division member 40A or 40B, and in that case, combustion chamber S1 is formed by a part of the space on the radially inner side of cylindrical portion 41 of division member 40A or 40B.

Though description has been given in Embodiments 1 to 6 and modifications thereof of the present invention described above with reference to an example in which only an ignition agent is loaded or an ignition agent and an enhancer agent are loaded in ignition portion 22a of igniter 22, in loading an enhancer agent, the enhancer agent does not necessarily have to be loaded in ignition portion 22a of igniter 22, but may be loaded at a position between ignition portion 22a of igniter 22 and gas generating agent 60, for example, with the use of a cup-shaped member or a container.

Though description has been given in Embodiments 1 to 6 and modifications thereof of the present invention described above with reference to an example in which housing main body 10A or 10B and igniter assembly 20A or 20B are coupled to each other by fixing by fastening, welding can also naturally be made use of for fixing housing main body 10A or 10B and igniter assembly 20A or 20B to each other.

Though description has been given in Embodiments 5 and 6 of the present invention described above with reference to an example in which housing main body 10B and partition member 80 are coupled to each other by fixing by fastening, welding or press-fitting can also naturally be made use of for fixing housing main body 10B and partition member 80 to each other. Furthermore, a metal plate formed from a single member relatively small in thickness in a part of which a third communication hole is provided can also be employed as a partition member, and in that case, from a point of view of facilitation of an assembly operation, the metal plate may be press-fitted or loosely fitted into the housing.

In addition, though description has been given in Embodiments 1 to 6 and modifications thereof of the present invention described above with reference to an example in which the present invention is applied to a cylinder type gas generator incorporated in a side air bag apparatus, applications of the present invention are not limited thereto and the present invention can be applied also to a cylinder type gas generator incorporated in an air bag apparatus on a passenger's seat side, a curtain air bag apparatus, a knee air bag apparatus, or a seat cushion air bag apparatus or what is called a T-shaped gas generator having an elongated outer geometry similarly to the cylinder type gas generator.

Furthermore, characteristic features shown in Embodiments 1 to 6 and modifications thereof of the present invention described above can naturally be combined with one another within the scope allowable in terms of construction of an apparatus.

The embodiments and modifications thereof disclosed herein are thus illustrative and non-restrictive in every respect. The technical scope of the present invention is delimited by the terms of the claims, and includes any modifications within the scope and meaning equivalent to the terms of the claims.

### REFERENCE SIGNS LIST

1A to 1J cylinder type gas generator; 10A, 10B housing main body; 11 circumferential wall portion; 12 closing portion; 13 gas discharge opening; 14 fastening portion; 15 sealing tape; 20A, 20B igniter assembly; 21 collar; 21a through portion; 21b annular groove portion; 22 igniter; 22a ignition portion; 22b terminal pin; 23 holding portion; 23a, 23b annular groove portion; 23c recess portion; 24 sealing member; 25 holder; 25a through portion; 25b fastening portion; 25c, 25d annular groove portion; 25e recess portion; 26, 27 sealing member; 30A to 30D cup-shaped member; 31 sidewall portion; 31a fixing portion; 32, 32' top wall portion; 32a first region; 32b second region; 40A, 40A1, 40B division member; 41 cylindrical portion; 42 annular portion; 42a cylindrical folded back portion; 43 skirt portion; 44 first communication hole; 45 second communication hole; 46 connection portion; 50A1, 50A, 50B separation wall member; 51 separation wall portion; 52 extension portion; 53 auxiliary communication hole; 60, 60' gas generating agent; 61 cushion member; 61a spring portion; 61b pressing portion; 70A, 70B filter; 71 hollow portion; 72 annular step portion; 80 partition member; 81 annular groove portion; 82 third communication hole; 83 sealing tape; 90 sealed container; 91 cup body; 92 cap body; G gap; S 1 combustion chamber; S1A first combustion chamber; S1B second combustion chamber; S2 gas passage chamber; and S3 gas emission chamber.

## Claims

1. A gas generator comprising:
an elongated cylindrical housing containing a first combustion chamber and a second combustion chamber in which a gas generating agent is arranged, a gas emission chamber emitting a gas generated in the first combustion chamber and the second combustion chamber to outside, and a gas passage chamber connecting the first combustion chamber and the second combustion chamber to each other, and having axial one and the other end portions closed;
an igniter assembled to the one end portion of the housing as facing the first combustion chamber; and
a partition member, a division member, and a separation wall member located in the housing and dividing a space in the housing into the first combustion chamber, the second combustion chamber, the gas emission chamber, and the gas passage chamber,
the partition member having a partition portion axially dividing the space in the housing,
the division member having a cylindrical portion radially dividing the space in the housing by being arranged on a side of the one end portion of the housing relative to the partition portion such that an axial direction of the cylindrical portion is substantially in parallel to an axial direction of the housing,
the separation wall member having a separation wall portion axially dividing a space inside the cylindrical portion by being arranged in the cylindrical portion,
the first combustion chamber including at least a part of the space inside the cylindrical portion on a side of the one end portion of the housing relative to the separation wall portion,
the second combustion chamber including at least a part of the space inside the cylindrical portion on a side of the other end portion of the housing relative to the separation wall portion,
the gas passage chamber including a space outside the cylindrical portion which faces a circumferential wall portion of the housing,
the gas emission chamber including a space on the side of the other end portion of the housing relative to the partition portion,
a first communication hole for communication between the first combustion chamber and the gas passage chamber being provided in a portion of the cylindrical portion for division into the first combustion chamber and the gas passage chamber,
a second communication hole for communication between the gas passage chamber and the second combustion chamber being provided in a portion of the cylindrical portion for division into the gas passage chamber and the second combustion chamber,
a gas discharge opening for discharge of a gas to the outside of the housing being provided in a portion of the housing defining the gas emission chamber, and
at least some of the gas generated in the first combustion chamber being emitted to the outside sequentially through the gas passage chamber, the second combustion chamber, and the gas emission chamber when the gas generator is activated.

2. The gas generator according to claim 1, wherein
the first combustion chamber and the second combustion chamber are completely separated from each other by the separation wall portion so as not to communicate with each other in the cylindrical portion.

3. The gas generator according to claim 1, wherein
the first combustion chamber and the second combustion chamber communicate with each other in a part of inside of the cylindrical portion.

4. The gas generator according to any of claims 1 to 3, wherein
the gas generating agent arranged in the first combustion chamber and the gas generating agent arranged in the second combustion chamber are different from each other in at least any of shape, size, and composition.

5. The gas generator according to any of claims 1 to 4, wherein
an axial end portion of the cylindrical portion located on the side of the other end portion of the housing abuts on the partition portion.

6. The gas generator according to any of claims 1 to 5, wherein
the division member further includes an annular portion erected radially outward from an axial end portion of the cylindrical portion located on the side of the other end portion of the housing.

7. The gas generator according to claim 6, wherein
the division member is fixed to the housing as the annular portion is press-fitted into the housing.

8. The gas generator according to any of claims 1 to 7, the gas generator further comprising a cup-shaped member accommodating the gas generating agent arranged in the first combustion chamber, the gas generating agent arranged in the second combustion chamber, and the separation wall member and at least partially inserted in the cylindrical portion, wherein
the partition portion is formed by a top wall portion of the cup-shaped member located on the side of the other end portion of the housing.

9. The gas generator according to any of claims 1 to 7, the gas generator further comprising a cup-shaped member accommodating the gas generating agent arranged in the first combustion chamber and at least partially inserted in the cylindrical portion, wherein
the separation wall portion is formed by a top wall portion of the cup-shaped member located on the side of the other end portion of the housing.

10. The gas generator according to any of claims 1 to 9, the gas generator comprising a filter arranged in the gas emission chamber through which the gas generated in the first combustion chamber and the second combustion chamber passes, wherein
the filter is formed from a member having a hollow portion extending along the axial direction of the housing and reaching an axial end surface located on a side of the partition portion, and
the partition portion includes a first region which is located to be opposed to the hollow portion and opens as a result of burning of the gas generating agent and a second region which is annularly located to surround the first region so as to be opposed to a portion of the axial end surface of the filter except for the hollow portion and does not open even when the gas generating agent burns.
